(19) **Europäisches Patentamt**
**European Patent Office**
**Office européen des brevets**

(11) **EP 3 070 917 A1**

(12) **EUROPEAN PATENT APPLICATION**

(43) Date of publication:
**21.09.2016 Bulletin 2016/38**

(51) Int Cl.:
*H04M 3/08* (2006.01)        *H04M 3/22* (2006.01)
*H04M 3/30* (2006.01)

(21) Application number: **15305389.7**

(22) Date of filing: **17.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **Dardenne, Xavier**
**6041 Gosselies (BE)**

• **Wang, Daping**
**Melbourne, Victoria VIC 3000 (AU)**
• **Henriet, Etienne**
**6041 Gosselies (BE)**

(74) Representative: **D'Halleweyn, Nele Veerle Trees Gertrudis et al**
**Arnold & Siedsma**
**Bezuidenhoutseweg 57**
**2594 AC The Hague (NL)**

Remarks:
Claims filed after the date of filing of the application (Rule 68(4) EPC).

(54) **Method for estimating a location of a bridge tap**

(57) A method for estimating a location of a bridge tap, said method comprising: measuring at least one measure for at least one of a tap length, a pre-tap length and a post-tap length, in a central office or in a street cabinet; the pre-tap length being the distance between the central office or the street cabinet and the bridge tap; the post-tap length being the distance between the bridge tap and a line-end at the customer premises; and the tap length being the length of the bridge tap; obtaining statistical data for at least one of the tap length, the pre-tap length and the post-tap length; determining whether the bridge tap is located in the customer premises or in the network based on said at least one measure and said statistical data.

FIG. 3

**Description**

Field of Invention

The field of the invention relates to localization of bridge taps. Particular embodiments relate to a method and system for estimating a location of a bridge tap, and in particular for estimating whether or not a bridge tap is located within a customer premises.

Background

With the increasing deployment of IPTV solutions, Video-On-Demand offers or Triple-play services, both the system performances and the customer support become more and more exigent, particularly on Digital Subscriber Lines (DSL). The physical link, which transports the information through wire lines up to the end user, is known to be the bottleneck for the Quality of Service. Hence, it is advantageous to be able to remotely diagnose sources of physical problems. This helps the operators to gain in service quality as well as to save money and time by not involving human interventions for all types of requests.

In a communication medium, such as a twisted pair in the xDSL case, the presence of bridge taps, i.e. an un-terminated loop segment connected to the main transmission line, directly impacts the communication channel and limits the performances. Often, bad wirings inside customer houses can create bridge taps and dramatically reduce xDSL performance. Bridge taps may also be present in the last section of the loop, e.g. an unconnected spare copper pair between a street cabinet and a customer premises, or even in the first meters of the loop, when a twisted-pair has been re-assigned to another customer or when it has been connected to a new DSLAM in a Central Office (CO).

For this reason, techniques have been developed to enable the detection and, in some cases, approximate localization of bridge taps. Existing measurement techniques comprise SELT (Single Ended Line Test) and/or DELT (Dual Ended Line Test) in order to detect and localize a bridge tap. However, although these techniques can usually determine the bridge tap length and/or its distance from the CO, with a given accuracy, they are not able to explicitly tell whether it is located inside or outside the customer premises when it is located close to the end of the loop, or within operator's exchange when close to the CO itself.

Summary

The object of embodiment of the invention is to provide a method for estimating a location of a bridge tap in an improved manner.

According to a first aspect of the invention there is provided a method for estimating a location of a bridge tap. The method comprises measuring at least one measure for at least one of a tap length, a pre-tap length and a post-tap length, in a central office or in a street cabinet. The pre-tap length is the distance between the central office (or the street cabinet) and the bridge tap. The post-tap length is the distance between the bridge tap and a line-end at the customer premises. The tap length is the length of the bridge tap. The method further comprises obtaining statistical data for at least one of the tap length, the pre-tap length and the post-tap length; and determining whether the bridge tap is located in the customer premises or in the network based on said at least one measure and said statistical data.

Preferably the measuring comprises performing a SELT (Single Ended Line Test) and/or DELT (Dual Ended Line Test) measurement in a central office or in a street cabinet, wherein a line between the central office (or the street cabinet) and the customer premises containing a bridge tap is measured in order to obtain at least one measure for at least one of a tap length, a pre-tap length and a post-tap length, in a central office or in a street cabinet.

Preferably the determining comprises determining a probability that the bridge tap is located in the customer premises.

In an exemplary embodiment the at least one measure comprises a measure for the tap length, and the statistical data comprises an in-home statistical length distribution of the tap length in the customer premises and an in-network statistical length distribution in the network. The determining then preferably comprises determining a probability that the bridge tap is in the customer premises using the at least one measure, the in-home statistical length distribution and the in-network statistical length distribution. This exemplary embodiment is based on the inventive insight that the tap length within a customer premises is typically much shorter than the tap length outside of the customer premises, such that two distinct statistical length distributions exist for the tap length within a customer premises and outside of a customer premises.

In an exemplary embodiment the at least one measure comprises a measure for the pre-tap length and the statistical data comprises statistical data about the distance between the central office (or street cabinet) and the customer premises.

In a preferred embodiment the measuring is performed with an accuracy and the determining takes into account the accuracy. More in particular there may be taken into account a tap length accuracy parameter for the tap length, a pre-tap length accuracy parameter for the pre-tap length, and post-tap length accuracy parameter for the post-tap length.

According to another aspect of the invention there is provided a system for estimating a location of a bridge tap, said system comprising: a measurement unit configured for measuring at least one measure for at least one of a tap length, a pre-tap length and a post-tap length in a central office or in a street cabinet; a computation unit configured for obtaining statistical data for at least one of the tap length, the pre-tap length and the post-tap length, and for determining whether the bridge tap is located in the customer premises or in the network based on said at least one measure and said statistical data.

Preferably the measurement unit is configured to perform a SELT and/or a DELT measurement.

Preferably the computation unit is configured for determining a probability that the bridge tap is located in the customer premises.

According to an exemplary embodiment the at least one measure comprises a measure for the tap length and the statistical data comprises an in-home statistical length distribution of the tap length in the customer premises and an in-network statistical length distribution in the network. The computation unit may then be configured to compute a probability that that the bridge tap is in the customer premises using the at least one measure, the in-home statistical length distribution and the in-network statistical length distribution.

According to an exemplary embodiment the at least one measure comprises a measure for the pre-tap length and the statistical data comprises statistical data about the distance between the central office or street cabinet and the customer premises, e. g. a value $D_{ref}$ for the distance between the central office or street cabinet and the customer premises in combination with a accuracy $E_{ref}$, resulting in statistical data $D_{ref}$ +/- $E_{ref}$.

According to an exemplary embodiment the measuring is performed with a determined accuracy, and the computation unit is configured for taking into account the accuracy.

Exemplary embodiments of the invention rely on dynamic statistical models in order to compute the probability that a given bridge tap is located inside the customer premises, based on at least one of the following parameters: a first measure for an estimated distance between the central office and bridge tap (the pre-tap length) from a SELT measurement; a second measure for an estimated bridge tap length from a SELT and/or DELT measurement; a third measure for a distance between the central office and the customer premises from operator's cable plant reference data; a fourth measure for an estimated distance between bridge tap and a line-end in the customer premises (the post-tap length); statistical modelling data of at least one of the first, second, third and fourth measure, e.g. measurement and reference data accuracies; statistical distributions of "in-house" and "in-network" bridge tap length, known from historical data.

Preferably, the statistical distributions used are dynamic, as they can be adapted continuously thanks to feedback from field technicians. Hence, once in use, the accuracy of embodiments of the method and system of the invention may increase over time.

According to a further aspect of the invention, there is provided a computer program comprising computer-executable instructions to perform the determining, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 illustrates schematically a typical topology comprising a bridge tap;
Figure 2 illustrates schematically an interval comparison for use in an embodiment of the invention;
Figure 3 illustrates schematically a first exemplary embodiment of a method and system of the invention;
Figure 4 illustrates schematically a second exemplary embodiment of a method and system of the invention;
Figure 5 illustrates schematically a third exemplary embodiment of a method and system of the invention; and
Figure 6 illustrates schematically a further exemplary embodiment of a method and system of the invention.

Description of embodiments

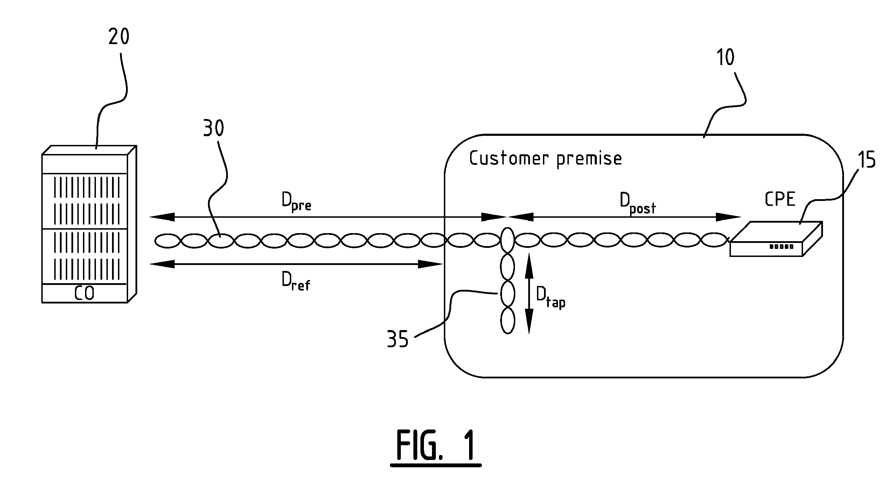

Figure 1 shows a typical topology in which embodiments of the invention may be applied. The topology comprises a central office (CO) 20 and a customer premises 10. The central office 20 is connected to a customer premises equipment (CPE) 15 through a main transmission line 30 of a communication medium, typically an xDSL line. There is included an "in-house" bridge tap 35 located in the customer premises 10. A bridge tap 35 is an unterminated loop segment which is connected to the main transmission line 30 of the communication medium.

The localization of the bridge tap 35, and in particular the discrimination between a bridge tap located at the CO, in the network, or at the customer premises, is advantageous since these different locations require a different resolution process. Customer premises problems are usually the responsibility of the end-user, with the assistance of the DSL service provider (or service re-seller). On the other hand, cabling problems at the central office or in the network are under the responsibility of the infrastructure owner, typically the incumbent operator. Further, in case of unbundling, differentiating between the loop belonging to the incumbent operator and the CO connections belonging to an alternative operator is useful. On customer premises side, when customers use assisted care, e.g. by calling helpdesk or use self care e.g. via a mobile App, an accurate prediction of the bridge tap location will lead to a more efficient corrective action.

In other words, the fault domain separation problem, i.e. determining in which domain (customer, incumbent operator supplying the loop or own responsibility) the fault lies, is useful for operators wanting to avoid unnecessary human interventions and truck rolls. This problem is particularly critical with high-frequency technology (typically high-end VDSL2), in which short bridge taps impact performance significantly.

Exemplary embodiments of the invention propose a novel approach for estimating whether a bridge tap 35 is located inside the customer premises 10 or in the network. The approach is based on a dynamic statistical model. Preferred embodiments provide the operator with a probability that the bridge tap 35 belongs to the customer premises 10 and a probability that the bridge tap belongs to the network.

Figure 1 illustrates a set of parameters that will be used throughout the remaining of the specification:

- the pre-tap distance $D_{pre}$ being the distance between CO 20 and the bridge tap 35;
- the bridge tap length $D_{tap}$ being the length of the bridge tap 35;
- the post-tap distance $D_{post}$ being the distance between the bridge tap 35 and the line end, i.e. the CPE 15 in the customer premises 10 in the example of figure 1;
- the network reference distance $D_{ref}$ being a known distance between CO 20 and the customer premises 10.

Further the following parameters will be used:

- the SELT pre-tap distance ($D_{pre}$) measurement accuracy $\pm E_{pre}$ ; in an exemplary embodiment $E_{pre} = \pm 10\%$ of $D_{pre}$ if $D_{pre} > 300m$, and $E_{pre} = \pm 30$ meters if $D_{pre} <= 300m$.
- the network reference distance ($D_{ref}$) accuracy $\pm E_{ref}$ (e.g. 20% of $D_{ref}$);
- the bridge tap length ($D_{tap}$) measurement accuracy $\pm E_{tap}$ (e.g. 10% of $D_{tap}$).

All actual (but usually unknown) values of these parameters will be noted as shown here above, while the measured value (with limited accuracy) will be noted with a "m" superscript: $D_{pre}^m, D_{post}^m, D_{tap}^m, D_{ref}^m$.

According to embodiments of the invention, three different approaches can be distinguished, depending on which parameters could be estimated among: the pre-tap length, the tap length, the post-tap length and the reference length. Embodiments implementing these three approaches are described hereafter.

*Oraly the tap length estimation is available*

Typically, a SELT measurement performed at the CO on a transmission line with a bridge tap connecting the CO with a customer premises will provide an estimation of the bridge tap length $D_{tap}^m$, as well as the distance $D_{pre}^m$ from the CO to the bridge tap. On the other hand, a DELT measurement will only provide the bridge tap length $D_{tap}^m$ through an analysis of the loop transfer function (Hlog). A major drawback of SELT is that it requires typically a service interruption. SELT signals used for the TDR/FDR (Time Domain Reflectometry /Frequency Domain Reflectometry) analysis are not compatible with DSL operation, and the DSL service must be interrupted during a SELT measurement. Moreover, the presence of a CPE may reduce SELT efficiency, so end-customer action may be required to ensure optimal measurement. On the other hand, typical DELT measurements can be performed with limited or no service interruption, and without any end-customer action.

In a first embodiment of the invention it is assumed that, if service interruption is not desirable or possible, or that end customer action is either not possible or not desirable, and that the distance $D_{pre}^m$ to the bridge tap cannot be estimated. It is further assumed that only the bridge tap length is estimated, e.g. using a DELT measurement. There is another typical use case in which this approach may be used: for instance when no cable plant reference data is available from any source. Indeed, the purpose of estimating the distance $D_{pre}^m$ between CO and bridge tap is to compare it to a known reference distance $D_{ref}^m$ between the CO and the customer home, in order to determine whether the bridge tap lies inside or outside the customer premises. When such reference distance to customer home is not available, the tap length estimation approach may be used.

Typically, a bridge tap located close to the end of the loop, i.e. in or near the customer premises, has two distinct origins:

- Bad wirings inside the customer premises. Such a bridge tap is usually relatively short.
- Spare loops connected to the street cabinets that operators can use, either in case of damaged loop between the street cabinet and the customer premises, or to connect future customers in the same street. Usually, such a bridge tap is much longer than an in-house one.

Hence, "in-house" (i.e. within the customer premises) and "in-network" bridge taps have two clearly distinct length distributions, and the knowledge of these statistical distributions can be used to estimate whether or not a bridge tap is located inside the customer premises, based only on a measurement of its length $D_{tap}^m$.

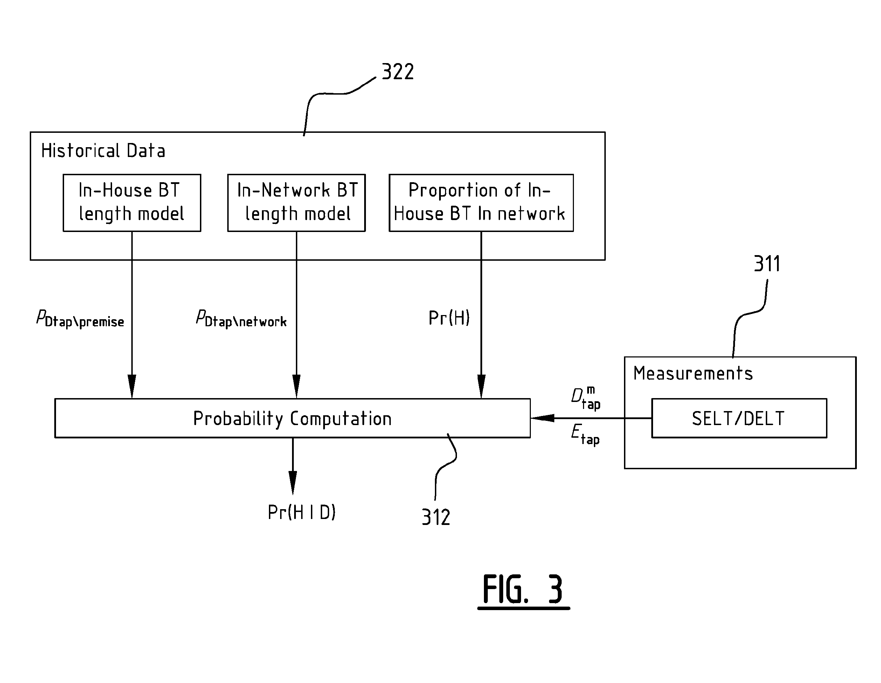

Figure 3 illustrates the embodiment, where only the tap length $D_{tap}^m$ is used in a diagnosis engine 312. The bridge tap length is estimated by a SELT or DELT measurement tool 311, and typically returns a range of possible values such as $D_{tap}^m \pm E_{tap}$.

The two following events are defined:

$H$ = bridge tap is in customer premises;
$D$ = measured bridge tap length is $D_{tap}^m \pm E_{tap}$.

From the Bayesian theory, one can compute the probability that a bridge tap is located inside the customer premises, knowing its estimated length, as follows:

$$\Pr(H \mid D) = \frac{\Pr(H \cdot D)}{\Pr(D)} = \frac{\Pr(D \mid H) \cdot \Pr(H)}{\Pr(D \mid H) \cdot \Pr(H) + \Pr(D \mid \tilde{H}) \cdot \Pr(\tilde{H})} \qquad (1)$$

where $\tilde{H}$ is the complementary event *of H*, i.e. $\tilde{H}$ = *bridged tap is in the network.*

Knowing the statistical distributions (density function) of "in-house" and "in-network" bridge tap lengths, $p_{Dtap|premise}$ and $p_{Dtap|network}$, respectively, the two probabilities Pr(*D|H*) and Pr(*D|$\tilde{H}$*) involved in Equation (1) can be computed as follows.

$$\Pr(D \mid H) = \text{Probability of detecting a bridged} - \text{tap of length } D_{tap}^m$$

$$\pm E_{tap}, \text{if the tap is inside the customer premises}$$

$$= \int_{D_{tap}^m - E_{tap}}^{D_{tap}^m + E_{tap}} p_{Dtap|premise} \cdot dx$$

$$\Pr(D \mid \tilde{H}) = \text{Probability of detecting a bridged} - \text{tap of length } D^m_{tap}$$

$$\pm E_{tap}, \text{if the tap is in the network}$$

$$= \int_{D^m_{tap}-E_{tap}}^{D^m_{tap}+E_{tap}} p_{Dtap|network} \cdot dx$$

The two probabilities *Pr(H)* and *Pr(H̃)* in Equation (1) are the "a-priori" probabilities that a bridge tap is inside the customer premises or in the network, once detected. These two events are complementary, and hence:

$$\Pr(\tilde{H}) = 1 - \Pr(H)$$

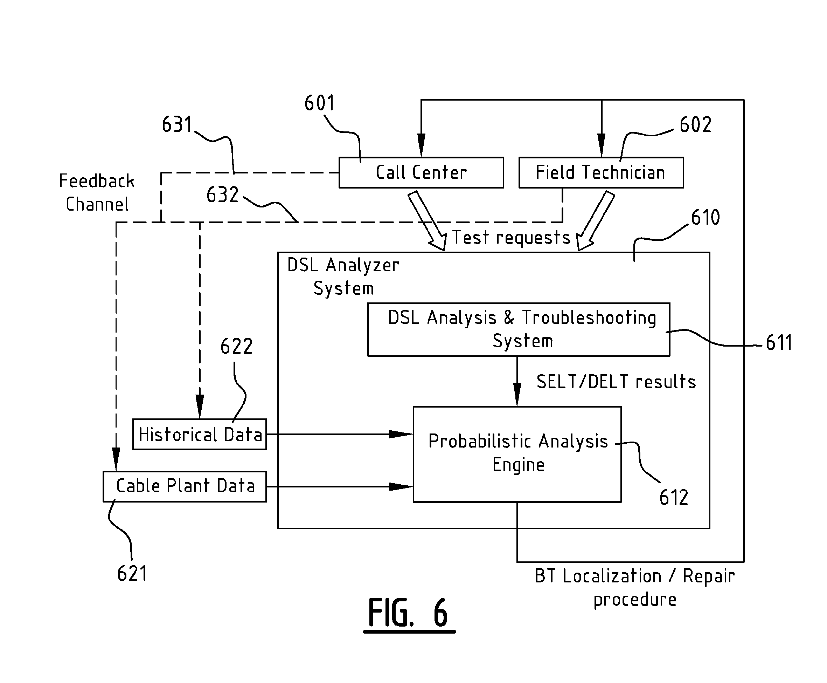

If an operator does not maintain any statistics about the location of detected bridge taps, these probabilities should be assumed equal to 0.5, meaning that a-priori, a bridge tap is just as likely to be inside as outside of the customer premises. On the other hand, if the operator knows, that e.g. historically 80% of the bridge taps are in the network, Pr(*H*) and Pr(*H̃*) may be replaced with 0.2 and 0.8, respectively. Such a-priori knowledge will increase the accuracy of the method. This a-priori knowledge about bridge tap locations may be improved over time through a feedback mechanism. An exemplary embodiment of such a feedback mechanism is discussed below with reference to figure 6.

As illustrated in figure 3, the historical data 322 including *Pr(H)*, $p_{Dtap|premise}$, $p_{Dtap|network}$ may be fed in the diagnostic tool 312 together with $D^m_{tap}$ and $E_{tap}$. The diagnostic tool 312 is configured to compute Pr(*H|D*) using Equation (1) above.

*Pre-tap length and reference length estimations are available*

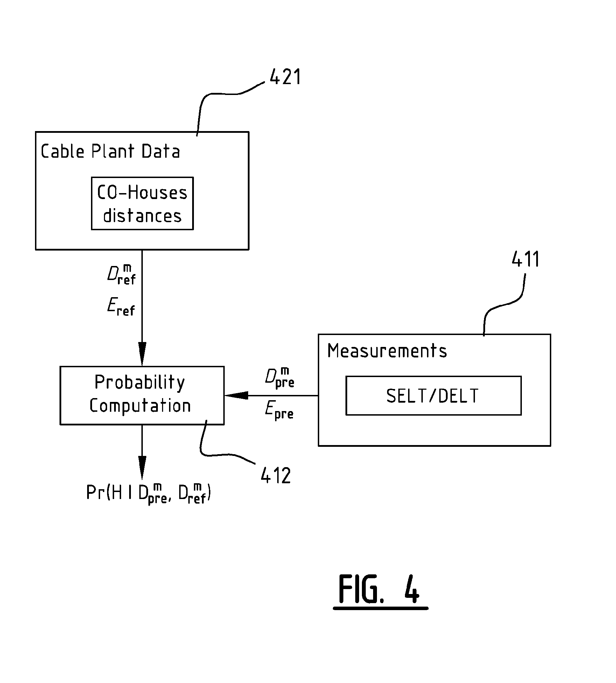

In a second embodiment of the invention, it is assumed that reference data, including information about distance between the CO and the customer premises, is available, and that the bridge tap distance can be estimated through a SELT measurement. This second embodiment is illustrated in figure 4.

When both the distance $D^m_{ref}$ to the customer premises and the distance $D^m_{pre}$ to the bridge tap are known, it can be determined whether the bridge tap is inside the customer premises by comparing these two values. However, as both distances are not usually known with a sufficient accuracy, preferably a probabilistic approach is used.

By knowing those two distances $D^m_{pre}$ and | $D^m_{ref}$, as well as their respective accuracy $E_{pre}$ and $E_{ref}$, it is possible to determine the probability that the bridge tap is inside the customer premises.

In this second embodiment, it is assumed that a SELT measurement tool 411 can be used to estimate the pre-tap distance, and that the operator has cable plant reference data 421 with distances between the CO and the customer premises.

It is then possible to compute the probability of a bridge tap to be inside the customer premises directly from those measurements, as follows:

$$\Pr\left(H \mid D^m_{pre}, D^m_{ref}\right) = \Pr\left(D_{pre} > D_{ref} \mid D^m_{pre}, D^m_{ref}\right)$$

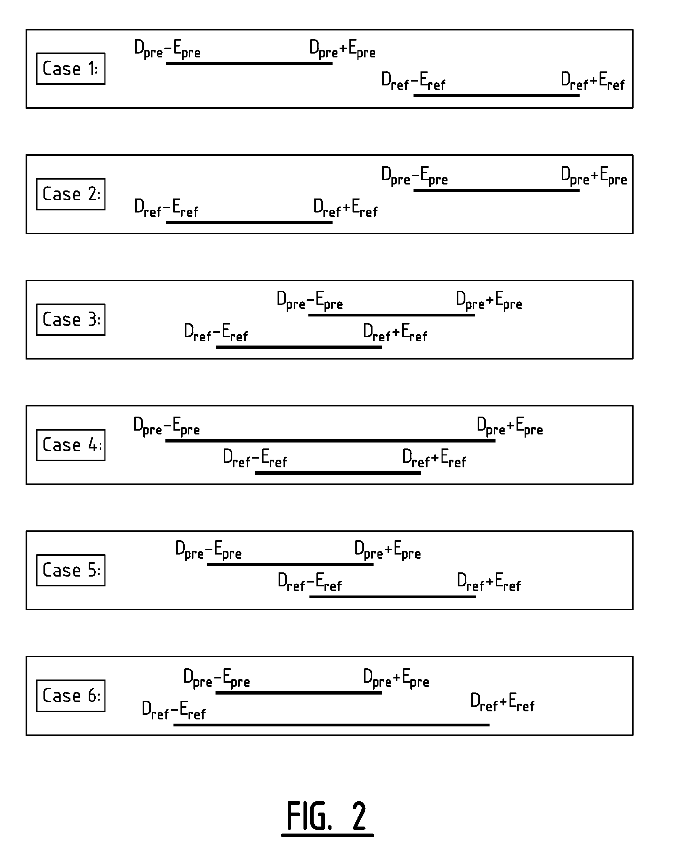

In order to compute this probability, six different scenarios must be considered, depending on the respective values of the pre-tap and reference distances as well as on their respective uncertainty or measurement accuracy. The six scenarios are depicted in Figure 2. In case 1 and case 2 there is no overlap between $D_{pre} \pm E_{pre}$ and $D_{ref} \pm E_{ref}$, and hence the location of the bridge tap can be derived with 100% certainty. In the other cases 3-6, the range $D_{pre} \pm E_{pre}$ overlaps with $D_{ref} \pm E_{ref}$, and hence the location cannot be determined with 100% certainty. However, in those cases, the probability of the bridge tap being located in the customer premises can be calculated by the diagnostic tool 412. After inspection of these six scenarios, it can be seen that the probability of having a bridge tap in the customer premises can be calculated as:

$$\Pr\left(D_{pre} > D_{ref} \mid D_{pre}^{m}, D_{ref}^{m}\right)$$

$$= \begin{cases} 0, & for\ case\ 1 \\ 1, & for\ case\ 2 \\ \int_{D_{pre}^{m}-E_{pre}}^{D_{pre}^{m}+E_{pre}} \Pr\left(D_{pre} > D_{ref} \mid D_{pre} = x\right). p_{pre}(x). dx & , otherwise \end{cases} \qquad (2)$$

where $p_{pre}(x)$ is the Probability Density Function (PDF) of $D_{pre}$. The PDF involved here does not consist of any kind of statistics about the distribution of $D_{pre}$ in the network, but is simply a characteristic of the measurement device 411. In order to keep equations relatively simple, and just for illustrative purposes, it will be assumed that $D_{pre}$ has a uniform distribution over the range $D_{pre}^{m} \pm E_{pre}$. However, any other PDF that would better model the characteristics of the measurement device could be used.

Assuming a uniform distribution, the PDF of $D_{pre}$ can be expressed as follows:

$$p_{pre}(x) = \frac{1}{2E_{pre}}$$

Equation (2) can then be rewritten:

$$\Pr\left(D_{pre} > D_{ref} \mid D_{pre}^{m}, D_{ref}^{m}\right) = \begin{cases} 0, & for\ case\ 1 \\ 1, & for\ case\ 2 \\ \int_{D_{pre}^{m}-E_{pre}}^{D_{pre}^{m}-E_{pre}} \frac{\Pr\left(x > D_{ref} \mid D_{ref}^{m}\right)}{2E_{pre}} dx & , otherwise \end{cases} \qquad (3)$$

$\Pr\left(x > D_{ref} \mid D_{ref}^{m}\right)$ can be calculated as:

$$\Pr\left(x > D_{ref} \mid D_{ref}^{m}\right)$$

$$= \begin{cases} 0, & when\ x \le D_{ref}^{m} - E_{ref} \\ 1, & when\ x \ge D_{ref}^{m} + E_{ref} \\ \int_{D_{ref}^{m}-E_{ref}}^{x} p_{ref}(x) dx & , otherwise\ (D_{ref}^{m} - E_{ref} < x < D_{ref}^{m} + E_{ref}) \end{cases} \qquad (4)$$

where $p_{ref}(x)$ is the PDF of $D_{ref}$, characterizing the accuracy of the reference data.

In case $D_{ref}$ has a uniform distribution over $D_{ref}^{m} \pm E_{ref}$, Equation (4) can be rewritten:

$$\Pr\left(x > D_{ref} \mid D_{ref}^{m}\right) = \begin{cases} 0, & when\ x \le D_{ref}^{m} - E_{ref}; \\ 1, & when\ x \ge D_{ref}^{m} + E_{ref}; \\ \dfrac{x - \left(D_{ref}^{m} - E_{ref}\right)}{2E_{ref}} & ,\ when\ D_{ref}^{m} - E_{ref} < x < D_{ref}^{m} - E_{ref} \end{cases} \qquad (5)$$

Substituting Equation (5) into Equation (3) yields:

$$\Pr\left(D_{pre} > D_{ref} \mid D_{pre}^m, D_{ref}^m\right) =$$

$$
\begin{cases}
0 \text{ , } for\ case\ 1 \\
1 \text{ , } for\ case\ 2 \\
\frac{1}{4.E_{pre}.E_{ref}} \int_{\max\left(D_{pre}^m - E_{pre},\, D_{ref}^m - E_{ref}\right)}^{\min\left(D_{pre}^m + E_{pre},\, D_{ref}^m + E_{ref}\right)} \left[x - \left(D_{ref}^m - E_{ref}\right)\right] dx \;+ \int_{D_{ref}^m + E_{ref}}^{D_{pre}^m + E_{pre},} \frac{1}{2.E_{pre}} dx \text{ ,} for\ cases\ 3\ and\ 4 \\
\frac{1}{4.E_{pre}.E_{ref}} \int_{\max\left(D_{pre}^m - E_{pre},\, D_{ref}^m - E_{ref}\right)}^{\min\left(D_{pre}^m + E_{pre},\, D_{ref}^m + E_{ref}\right)} \left[x - \left(D_{ref}^m - E_{ref}\right)\right] dx \text{ , } for\ cases\ 5\ and\ 6
\end{cases}
\tag{6}
$$

After computing the integrals of Equation 6 and introducing the following variables:

$$\alpha = \max\left(D_{pre}^m - E_{pre},\, D_{ref}^m - E_{ref}\right)$$

$$\beta = min\left(D_{pre}^m + E_{pre},\, D_{ref}^m + E_{ref}\right)$$

$$\gamma = \max(D_{pre}^m + E_{pre} - D_{ref}^m - E_{ref},\, 0)$$

A relatively simple expression describing the probability that a given bridge tap is inside the customer house, is obtained:

$$\Pr\left(H \mid D_{pre}^m, D_{ref}^m\right) = \Pr\left(D_{pre} > D_{ref} \mid D_{pre}^m, D_{ref}^m\right)$$

$$
= \begin{cases}
0, for\ case\ 1 \\
1, for\ case\ 2 \\
\dfrac{(\beta - \alpha)\left(\beta + \alpha - 2\left(D_{ref}^m - E_{ref}\right)\right)}{8 E_{pre} E_{ref}} + \dfrac{\gamma}{2 E_{pre}}, otherwise
\end{cases}
\tag{7}
$$

*Pre-tap length, tap length, and preference length estimations are available*

In a third embodiment it is assumed that all three parameters can be estimated. The first and second embodiment may be combined to further increase the accuracy of the decision on the location of the bridge tap. An "a-priori" probability that the bridge tap is inside the customer premises may be computed as in the second embodiment, and then the additional knowledge of the "in-house" and "in-network" distributions of tap lengths may be leveraged to compute an "a-posteriori" probability, knowing the estimated tap length.

According to the third embodiment, Equation (1) may be used to compute the probability that the bridge tap is inside the customer premises, based on the measured tap length and on tap length distributions for in-house and in-network taps. But instead of using 0.5, or network-wide statistics for the "a-priori" probability of a bridge tap to be inside the house as described in connection with the first embodiment, one can resort to Equation (7) to estimate a more accurate value of this "a-priori" probability, which is specific to the case under study. The probability that the bridge tap is in the customer premises can then be expressed as:

$$\Pr(H \mid D_{pre}^m, D_{ref}^m, D_{tap}^m) = \frac{\Pr(D \mid H).\Pr\left(H \mid D_{pre}^m, D_{ref}^m\right)}{\Pr(D \mid H).\Pr\left(H \mid D_{pre}^m, D_{ref}^m\right) + \Pr(D \mid \tilde{H}).\left(1 - \Pr\left(H \mid D_{pre}^m, D_{ref}^m\right)\right)}$$

Where all involved probabilities can be computed as described in connection with the first and second embodiment. This third embodiment has the advantage of being very accurate.

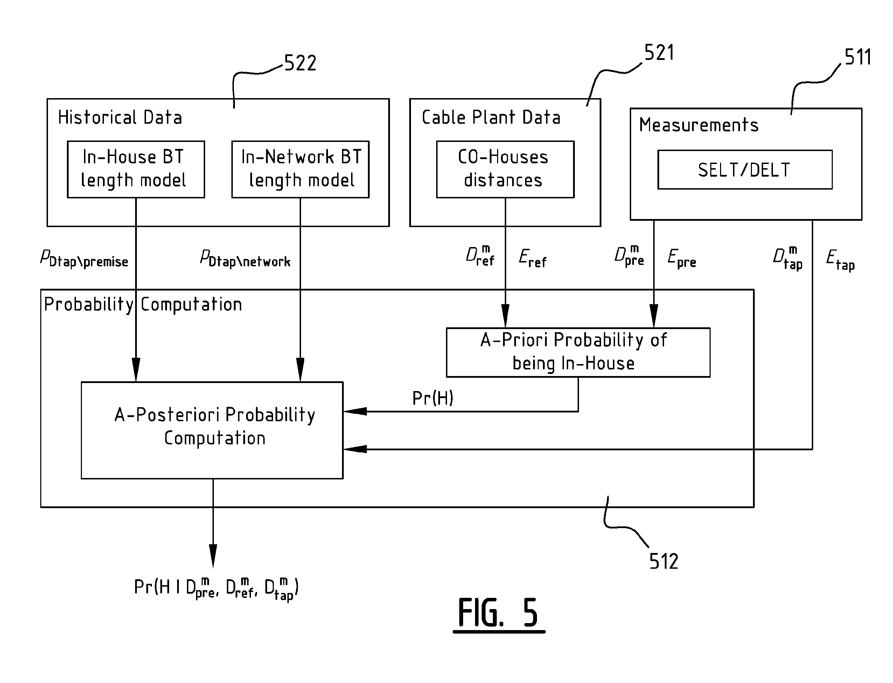

A high level functional description of the third embodiment is illustrated in Figure 5. A computation unit 512 receives measurement values $D_{pre}^m$ and $D_{tap}^m$ as well as measurement accuracies $E_{pre}$ and $E_{tap}$ from a measurement

tool 511. Further, historical data 522 and cable plant data 521 are fed into the computation unit 512 which is configured to compute $\Pr\left(\mathrm{H} \mid D_{pre}^m, D_{ref}^m\ D_{tap}^m\right)$, as in Equation (7).

*Post-tap length available*

In a fourth embodiment, the post-tap length is used for at least one of the following: validating the reference length estimation consistency with the measurements; providing a cross-check for the in-house/in-network discrimination. The post-tap length may be used in combination with the first, second or third embodiment to cross-check the obtained result. Corresponding analysis is based on the same probability concepts as the first, second and third embodiment, and is in particular useful as a complement to the approach of the first, second and third embodiment described above.

*Continuous improvement of the statistical models*

Whichever of these three embodiments is used, it is advantageous to also implement a feedback mechanism in exemplary embodiments to improve the statistical modelling of the various involved parameters. Indeed, initially, operators may not know accurately the distribution of in-house and in-network tap lengths distributions. So, when deploying this solution for the first time, some reasonable assumptions might have to be taken about these distributions. However, after each human intervention carried out to solve a bridge tap related issue, some more accurate measurements could be performed by field technicians and sent back to the operators in order to improve the statistical model. For instance, when a technician has to go to a customer premises to remove a bridge tap, the length of this bridge tap may be more accurately measured since measurements carried out close to the bridge tap are typically more accurate than those performed from the CO. This measurement can be sent back to the operator's database, along with the information about whether or not the bridge tap was inside the customer premises or in the network. Also, the knowledge of the real position of the bridge tap as compared to the measurement results will allow for continuous refinement of the corresponding models.

Figure 6 depicts an exemplary implementation of such a global bridge tap analysis method, including a feedback mechanism. Typically, call centre agents 601 or field technicians 602 trigger a DSL diagnosis tool 611 that will perform measurements (SELT and /or DELT) on the line. Those measurements are fed to a probabilistic diagnosis engine 612 implementing any one of the three embodiments, along with operator's cable plant reference 621 and historical data 622. Depending on the computed output (probability that the bridge tap is inside the customer house), appropriate corrective actions may be taken from either call centre agents 601 or field technicians 602. Finally, when the problem has been solved, i.e. when the bridge tap has been removed, the operator's database and the probability models may be updated, see arrows 631, 632. This feedback mechanism ensures that the accuracy of the method will definitely increase over time and will adapt to every operator's particular context.

*Machine learning approach*

As a further exemplary embodiment, an approach based on pure machine learning is proposed. Such an approach is advantageous when sufficient input data is available, e.g. pre-tap, post-tap and bridge tap length measurements, along with a sufficient database of previously detected bridge taps (with corresponding in-home or in-network location).

Self-learning classification or pattern recognition algorithms, such as Perceptron, Multi-Layer Perceptron or alike, may be used to automatically learn the typical differences between in-home and in-network bridge taps, based on the content of the initial database. Then, for new cases, these algorithms may be configured to propose a decision (in-home or not) and to adapt automatically based on feedback from the field.

When enough historical data is available, this approach could be used as a standalone method, or in conjunction with one of the three above mentioned embodiments, to further improve the reliability of the final decision.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units" or "tools", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1.  A method for estimating a location of a bridge tap, said method comprising:

    measuring at least one measure for at least one of a tap length, a pre-tap length and a post-tap length, in a central office or in a street cabinet; the pre-tap length being the distance between the central office or the street cabinet and the bridge tap; the post-tap length being the distance between the bridge tap and a line-end at the customer premises; and the tap length being the length of the bridge tap;
    obtaining statistical data for at least one of the tap length, the pre-tap length and the post-tap length;
    determining whether the bridge tap is located in the customer premises or in the network based on said at least one measure and said statistical data.

2.  The method of claim 1, wherein said measuring comprises performing a SELT (Single Ended Line Test) and/or DELT (Dual Ended Line Test) measurement.

3.  The method of claim 1 or 2, wherein said determining comprises determining a probability that the bridge tap is located in the customer premises.

4.  The method of any one of the previous claims, wherein said at least one measure comprises a measure for the tap length; wherein said statistical data comprises an in-home statistical length distribution of the tap length in the customer premises and an in-network statistical length distribution in the network, respectively.

5.  The method of claim 4, wherein said determining comprises determining a probability that the bridge tap is in the customer premises using the at least one measure, the in-home statistical length distribution ($p_{Dtap|premise}$) and the in-network statistical length distribution ($P_{Dtap|network}$).

6.  The method of any one of the previous claims, wherein said at least one measure comprises a measure for the pre-tap length; wherein said statistical data comprises statistical data about the distance ($D_{ref} \pm E_{ref}$) between the central office or street cabinet and the customer premises.

7.  The method of any one of the previous claims, wherein said measuring is performed with a determined accuracy ($E_{pre}$, $E_{tap}$, $E_{post}$), and wherein said determining takes into account the accuracy.

8.  A computer program comprising computer-executable instructions to perform the determining of the method, when the program is run on a computer, of any one of the claims 1-7.

9.  A digital data storage medium encoding a machine-executable program of instructions to perform the determining of the method of any one of the claims 1-7.

**10.** A computer program product comprising computer-executable instructions for performing the determining of the method of any one of the claims 1-7.

**11.** A system for estimating a location of a bridge tap, said system comprising:

a measurement unit configured for measuring at least one measure for at least one of a tap length, a pre-tap length and a post-tap length in a central office or in a street cabinet; the pre-tap length being the distance between the central office or the street cabinet and the bridge tap; the post-tap length being the distance between the bridge tap and a line-end at the customer premises; and the tap length being the length of the bridge tap; a computation unit configured for obtaining statistical data for at least one of the tap length, the pre-tap length and the post-tap length and for determining whether the bridge tap is located in the customer premises or in the network based on said at least one measure and said statistical data.

**12.** The system of claim 11, wherein the measurement unit is configured to perform a SELT and/or a DELT measurement.

**13.** The system of claim 11 or 12, wherein the computation unit is configured for determining a probability that the bridge tap is located in the customer premises.

**14.** The system of any of the claims 11-13, wherein said at least one measure comprises a measure for the tap length; wherein said statistical data comprises an in-home statistical length distribution of the tap length in the customer premises and an in-network statistical length distribution in the network.

**15.** The system of claim 14, wherein the computation unit is configured to compute a probability that the bridge tap is in the customer premises using the at least one measure, the in-home statistical length distribution ($p_{Dtap|premise}$) and the in-network statistical length distribution ($p_{Dtap|network}$).

**Amended claims in accordance with Rule 137(2) EPC.**

**1.** A method for estimating a location of a bridge tap (35), said method comprising:

measuring at least one measure for at least one of a tap length, a pre-tap length and a post-tap length, in a central office or in a street cabinet; the pre-tap length being the distance between the central office (20) or the street cabinet and the bridge tap; the post-tap length being the distance between the bridge tap and a line-end at the customer premises (10); and the tap length being the length of the bridge tap; obtaining statistical data for at least one of the tap length, the pre-tap length and the post-tap length; **characterized in that** the method further comprises:

determining whether the bridge tap is located in the customer premises (10) or in the network based on said at least one measure and said statistical data.

**2.** The method of claim 1, wherein said measuring comprises performing a SELT (Single Ended Line Test) and/or DELT (Dual Ended Line Test) measurement.

**3.** The method of claim 1 or 2, wherein said determining comprises determining a probability that the bridge tap (35) is located in the customer premises (10).

**4.** The method of any one of the previous claims, wherein said at least one measure comprises a measure for the tap length; wherein said statistical data comprises an in-home statistical length distribution of the tap length in the customer premises (10) and an in-network statistical length distribution in the network, respectively.

**5.** The method of claim 4, wherein said determining comprises determining a probability that the bridge tap (35) is in the customer premises (10) using the at least one measure, the in-home statistical length distribution ($p_{Dtap|premise}$) and the in-network statistical length distribution ($p_{Dtap|netwok}$).

**6.** The method of any one of the previous claims, wherein said at least one measure comprises a measure for the pre-tap length; wherein said statistical data comprises statistical data about the distance ($D_{ref} \pm E_{ref}$) between the central office (20) or street cabinet and the customer premises (10).

7. The method of any one of the previous claims, wherein said measuring is performed with a determined accuracy ($E_{pre}$, $E_{tap}$, $Ep_{ost}$), and wherein said determining takes into account the accuracy.

8. A computer program comprising computer-executable instructions to perform the determining of the method, when the program is run on a computer, of any one of the claims 1-7.

9. A digital data storage medium encoding a machine-executable program of instructions to perform the determining of the method of any one of the claims 1-7.

10. A computer program product comprising computer-executable instructions for performing the determining of the method of any one of the claims 1-7.

11. A system for estimating a location of a bridge tap, said system comprising:

a measurement unit (311) configured for measuring at least one measure for at least one of a tap length, a pre-tap length and a post-tap length in a central office or in a street cabinet; the pre-tap length being the distance between the central office or the street cabinet and the bridge tap; the post-tap length being the distance between the bridge tap and a line-end at the customer premises;
and the tap length being the length of the bridge tap;
a computation unit (312) configured for obtaining statistical data for at least one of the tap length, the pre-tap length and the post-tap length and for determining whether the bridge tap is located in the customer premises or in the network based on said at least one measure and said statistical data.

12. The system of claim 11, wherein the measurement unit (311) is configured to perform a SELT and/or a DELT measurement.

13. The system of claim 11 or 12, wherein the computation unit (312) is configured for determining a probability that the bridge tap is located in the customer premises.

14. The system of any of the claims 11-13, wherein said at least one measure comprises a measure for the tap length; wherein said statistical data comprises an in-home statistical length distribution of the tap length in the customer premises and an in-network statistical length distribution in the network.

15. The system of claim 14, wherein the computation unit is configured to compute a probability that the bridge tap is in the customer premises using the at least one measure, the in-home statistical length distribution ($p_{Dtap|premise}$) and the in-network statistical length distribution ($P_{Dtap|network}$).

## FIG. 1

EP 3 070 917 A1

FIG. 2

FIG. 3

EP 3 070 917 A1

**421**

Cable Plant Data

CO-Houses distances

$D_{ref}^{m}$
$E_{ref}$

Probability Computation

$D_{pre}^{m}$
$E_{pre}$

**411**

Measurements

SELT/DELT

**412**

$Pr(H \mid D_{pre}^{m}, D_{ref}^{m})$

FIG. 4

Historical Data — 522

In-House BT length model

In-Network BT length model

Cable Plant Data — 521

CO-Houses distances

Measurements — 511

SELT/DELT

$P_{Dtap\backslash premise}$

$P_{Dtap\backslash network}$

$D_{ref}^{m}$ | $E_{ref}$

$D_{pre}^{m}$ | $E_{pre}$

$D_{tap}^{m}$ | $E_{tap}$

Probability Computation

A-Priori Probability of being In-House

Pr(H)

A-Posteriori Probability Computation

512

$Pr(H \mid D_{pre}^{m}, D_{ref}^{m}, D_{tap}^{m})$

<u>FIG. 5</u>

EP 3 070 917 A1

17

FIG. 6

Europäisches
Patentamt

European
Patent Office

Office européen
des brevets

# EUROPEAN SEARCH REPORT

**Application Number**

EP 15 30 5389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/130877 A2 (ASSIA INC [US]; AT & T KNOWLEDGE VENTURES LP [US]; GINIS GEORGE [US];) 15 November 2007 (2007-11-15) <br> * paragraph [0002] * <br> * paragraph [0004] * <br> * paragraph [0018] - paragraph [0021]; figure 1 * <br> * paragraph [0029] - paragraph [0033] * <br> * paragraph [0035] - paragraph [0036]; figure 2 * <br> * paragraph [0038] * <br> * paragraph [0041] * <br> * paragraph [0045] - paragraph [0051] * <br> * paragraph [0058] - paragraph [0059]; figure 5 * <br> * paragraph [0063] - paragraph [0077]; figure 6 * <br> * paragraph [0079]; figure 7 * <br> * paragraph [0084]; figure 11 * <br> * paragraph [0103] - paragraph [0107]; figure 17 * <br> ----- | 1-15 | INV. <br> H04M3/08 <br> H04M3/22 <br> H04M3/30 |
| X | US 2005/243904 A1 (HART RICHARD D [US] ET AL) 3 November 2005 (2005-11-03) <br> * paragraph [0001] - paragraph [0003] * <br> * paragraph [0009] - paragraph [0012]; figure 1 * <br> * paragraph [0016] - paragraph [0020]; figures 3,4 * <br> * paragraph [0023]; figure 9 * <br> ----- <br> -/-- | 1-15 | TECHNICAL FIELDS SEARCHED (IPC) <br> H04M |

The present search report has been drawn up for all claims

| Place of search | Date of completion of the search | Examiner |
|---|---|---|
| The Hague | 27 August 2015 | Roldán Andrade, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

**Application Number**

EP 15 30 5389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/219413 A1 (DUVAUT PATRICK [US] ET AL) 11 September 2008 (2008-09-11)<br>* paragraph [0002] - paragraph [0008] *<br>* paragraph [0032] - paragraph [0037]; figure 1 *<br>* paragraph [0041] - paragraph [0047]; figures 3,4a,4b *<br>* paragraph [0057] - paragraph [0072]; figures 11, 13a-13c * | 1-15 | |
| X | US 2004/230390 A1 (GALLI STEFANO [US] ET AL) 18 November 2004 (2004-11-18)<br>* paragraph [0002] - paragraph [0011] *<br>* paragraph [0016] - paragraph [0018] *<br>* paragraph [0027] - paragraph [0038]; figures 1a,1b *<br>* paragraph [0041] - paragraph [0078]; figures 4,5 * | 1-15 | |

TECHNICAL FIELDS
SEARCHED (IPC)

The present search report has been drawn up for all claims

| Place of search | Date of completion of the search | Examiner |
|---|---|---|
| The Hague | 27 August 2015 | Roldán Andrade, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5389

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2015

| Patent document cited in search report | | | Publication date | Patent family member(s) | | | Publication date |
|---|---|---|---|---|---|---|---|
| WO 2007130877 | A2 | | 15-11-2007 | AU | 2007248256 | A1 | 15-11-2007 |
| | | | | BR | PI0709756 | A2 | 26-07-2011 |
| | | | | CA | 2651247 | A1 | 15-11-2007 |
| | | | | CN | 101517965 | A | 26-08-2009 |
| | | | | CN | 101523804 | A | 02-09-2009 |
| | | | | CN | 101523882 | A | 02-09-2009 |
| | | | | EP | 2025115 | A2 | 18-02-2009 |
| | | | | EP | 2033368 | A2 | 11-03-2009 |
| | | | | EP | 2036249 | A2 | 18-03-2009 |
| | | | | EP | 2388984 | A1 | 23-11-2011 |
| | | | | JP | 5023144 | B2 | 12-09-2012 |
| | | | | JP | 5486923 | B2 | 07-05-2014 |
| | | | | JP | 5555488 | B2 | 23-07-2014 |
| | | | | JP | 2009535999 | A | 01-10-2009 |
| | | | | JP | 2009536000 | A | 01-10-2009 |
| | | | | JP | 2009536001 | A | 01-10-2009 |
| | | | | US | 2009161741 | A1 | 25-06-2009 |
| | | | | US | 2009168972 | A1 | 02-07-2009 |
| | | | | US | 2010166051 | A1 | 01-07-2010 |
| | | | | WO | 2007130877 | A2 | 15-11-2007 |
| | | | | WO | 2007130878 | A2 | 15-11-2007 |
| | | | | WO | 2007130879 | A2 | 15-11-2007 |
| US 2005243904 | A1 | | 03-11-2005 | EP | 1743433 | A2 | 17-01-2007 |
| | | | | GB | 2430592 | A | 28-03-2007 |
| | | | | US | 2005243904 | A1 | 03-11-2005 |
| | | | | WO | 2005112284 | A2 | 24-11-2005 |
| US 2008219413 | A1 | | 11-09-2008 | US | 2008219413 | A1 | 11-09-2008 |
| | | | | US | 2008240368 | A1 | 02-10-2008 |
| | | | | US | 2008279269 | A1 | 13-11-2008 |
| | | | | US | 2008298555 | A1 | 04-12-2008 |
| US 2004230390 | A1 | | 18-11-2004 | CA | 2522902 | A1 | 02-12-2004 |
| | | | | EP | 1623239 | A2 | 08-02-2006 |
| | | | | JP | 4317873 | B2 | 19-08-2009 |
| | | | | JP | 2006526365 | A | 16-11-2006 |
| | | | | US | 2004230390 | A1 | 18-11-2004 |
| | | | | WO | 2004104531 | A2 | 02-12-2004 |

EPO FORM P0459

For more details about this annex : see Official Journal of the European Patent Office, No. 12/82